# EUROPEAN PATENT APPLICATION

(11) **EP 0 676 324 A1**
(43) Date of publication of application: **11.10.1995**
(21) Application number: 95400761.3
(22) Date of filing: 05.04.1995
(51) Int. Cl.: B62J 1/26

(54) **Inflatable seat**

(30) Priority: 11.04.1994 ZA 942470
(71) Applicant: FUTURE PATENTS CC, Melrose, 2196 (ZA)
(72) Inventor: Melland, Tristan Guy, Illovo (ZA)
(74) Representative: Desaix, Anne

(57) **Abstract**

A seat assembly (40) which includes a holder (24) which is attachable to a support structure such as the frame of a bicycle, the holder (24) defining a cavity (40) and having peripheral fastening formations (46) projecting into the cavity (44); and a cushion (10) which comprises an elastic, inflatable body (12) having a first external surface (16) for contact with a portion of the body of a user, a second external surface (22) locatable in the cavity (44), and peripheral fastening means (48) locatable in a zone (26) between the first and second surfaces (16,22), the peripheral fastening means (48) being adapted to engage with the zone (26) and with the fastening formations (46, 48) of the holder (24). A method of manufacturing the cushion (10) is also disclosed. The seat assembly (40) may be suitable for use as a bicycle or motorcycle saddle.

## Description

This invention relates to a method of manufacturing a cushion for use in an inflatable seat, and a seat assembly incorporating this cushion.

### BACKGROUND TO THE INVENTION

Most commonly used bicycles give rise to a certain degree of discomfort from sitting on relatively hard seats or saddles for extended periods, particularly if riders are casual and irregular. The off-road use of bicycles and the use of narrow saddles such as those usually fitted to racing bicycles generally aggravate this discomfort, and hence detract from the riding pleasure. Competitive cyclists, on the other hand, are generally less concerned about seating comfort and will usually dispense with any padding or cushioning which contributes to the total mass of their bicycles.

Inflatable bicycle seats have been developed over many years but have not found widespread acceptance by bicycle manufactures or users. This appears to be attributable to the general instability of inflatable cushions, and to the relatively high cost of manufacturing those.

In some cases, for example, flexible, relatively inelastic covers have been drawn over inflatable, elastic bodies in order to maintain a substantially pear-shaped configuration suitable for use on bicycle seats. In other instances, internal webs or ribs have been provided to inhibit the general "ballooning" effect, which occurs when ordinary rubber bladders or similar inflatable bodies are inflated with air. These webs or ribs add a substantial degree of complexity to the manufacturing process, which tends to make the cost of finished products prohibitive to the casual user.

The present invention seeks to address these disadvantages in the manner described below.

### SUMMARY OF THE INVENTION

According to one aspect of the present invention, there is provided a method of manufacturing a cushion for use in conjunction with a holder for holding the cushion, the holder defining a cavity and having fastening formations projecting into the cavity, characterized in that the method includes the steps of:
- shaping an elastic material into a hollow, inflatable body having a first external surface for supporting a portion of the body of a user, a second external surface which is locatable in the cavity of the holder, and a zone between the first and second external surfaces; and
- providing fastening means adapted to engage with the zone and with the fastening formations of the holder.

The zone between the first and second external surfaces may comprise formations which may be complemental to formations on the fastening means and adapted to engage therewith.

The inflatable body and fastening means may be formed simultaneously by means of a blow moulding or rotational moulding step.

In the shaping step, at least one zone of relative inelasticity may be formed in the inflatable body, thereby allowing lesser expansion of the said zone of relative inelasticity under increasing internal pressure, than the rest of the inflatable body. The zone of relative inelasticity may include or be connected to the zone between the first and second surfaces.

The invention extends to a cushion for use in conjunction with a holder for holding the cushion, characterized in that the cushion includes:
- an elastic, inflatable body having a first external surface for contact with a portion of the body of a user; a second external surface which is locatable in a cavity of the holder; the holder having fastening formations projecting inwardly into the cavity; and a zone between the first and second external surfaces; and
- fastening means locatable in the zone between the first and second external surfaces, the fastening means being adapted to engage with the zone and with the fastening formations of the holder.

The engagement of the fastening means with the zone and the fastening formations may become tighter with increasing internal pressures within the inflatable body.

The fastening means and the elastic body may be integrally connected to each other.

The body is preferably symmetrical about a longitudinal axis, and may include a pair of laterally extending lobes which are so dimensioned as to provide a seating area. The body may further include a nose portion arranged along the longitudinal axis.

The inflatable body may be substantially elliptical when viewed in cross section through the lobes. The body is preferably also at least partially elliptical when viewed along a section taken along the longitudinal axis of the body. The cushion is hence preferably comparatively shallow in relation to its length and width, which generally inhibits lateral distortion during use, when the fastening means are held captive by the holder.

The inflatable body may include at least one region of relative inelasticity, preferably extending in the direction of its longitudinal axis, in order to allow differential, lateral expansion of the body at increasing internal pressures.

According to a further aspect of the invention there is provided a seat assembly comprising a cushion and a holder attachable to a support structure, characterized in that the holder defines a cavity and has peripheral fastening formations projecting into the cavity; and in that the cushion comprises an elastic, inflatable body having a first external surface for contact with a portion of the body of a user, a second external surface locatable in the cavity, and peripheral fastening means located in a zone between the first and second surfaces, the peripheral fastening means being adapted to engage with the zone and with the fastening formations of the holder.

The engagement of the fastening means with the zone and with the fastening formations may become tighter with increasing internal pressures within the inflatable body.

The holder preferably has a convexly curved rear portion, and may taper towards a forwardly directed nose portion. The cushion conveniently has an outer profile which is substantially similar to the inner profile of the holder. Both the holder and the cushion may be generally symmetrical about a common longitudinal axis.

The holder is preferably cupped, having an inwardly projecting flange formation along its upper periphery, which provides a fastening formation for the cushion. The fastening means of the cushion may be in the form of a continuous, lateral recess which is complementary to the flange formation of the holder. In use, the recess along the cushion preferably nests underneath the flange formation on the holder.

The rearward region of the holder may be raised in relation to the remainder of the holder's upper peripheral region. This may provide rearward support for the cushion during use.

The nose portion of the cushion may project laterally beyond the immediately adjacent regions of the holder to prevent a user's legs from chafing against the holder during use.

According to another aspect of the invention, there is provided an inflatable seat which includes a rigid receptacle which is locatable on a support structure; and a resiliently extendible barrier layer, characterized in that the barrier layer is held captive by the receptacle, in that it presents an external seating surface while defining at least part of an expandable space, and in that the barrier layer includes at least two zones of differing extendibility so that the barrier layer is capable of selective deformation under increasing inflation until it assumes a desired seating configuration.

The barrier layer may form part of an inflatable, elastomeric bladder which is receivable into a cup-shaped receptacle. The exposed portion of the bladder conveniently presents the external seating surface, which may be textured for comfort.

The bladder may have selectively thinned wall sections which preferentially expand under increasing inflation to form bulbous portions suitable for supporting a user's buttocks.

### BRIEF DESCRIPTION OF THE DRAWINGS

The present invention is described below with reference to the accompanying diagrammatic drawings in which
- Figure 1 shows an upper plan view of a cushion according to the invention;
- Figure 2 shows a lower plan view of the cushion of Figure 1;
- Figure 3 shows a side elevational view of the cushion of Figure 1;
- Figure 4 shows a cross sectional view of the cushion of Figure 1 taken at IV - IV;
- Figure 5 shows a cross sectional view of the cushion of Figure 1 taken at V-V in Figure 1;
- Figure 6 shows a perspective view of one half of a split mould, suitable for use in a method of manufacturing the cushion of Figure 1;
- Figure 7 shows a side elevational view of a seat assembly incorporating the cushion of Figure 1;
- Figure 8 shows a sectional view of the seat of Figure 7, viewed along the central axis of the seat of Figure 7; and
- Figures 9A and 9B show enlarged views of a portion of the assembly of Figure 8, enclosed by a broken line, showing a portion of the cushion of Figure 1 in an uninflated and inflated condition respectively.

### DESCRIPTION OF A PREFERRED EMBODIMENT OF THE INVENTION

A cushion according to the present invention is generally denoted by reference numeral 10 in the accompanying drawings. The body 10 includes an elastic, inflatable body 12, which surrounds an internal cavity 14 into which a compressed gas, most preferably air, is receivable.

The body 12 is conveniently formed by moulding a known polymer, such as a polypropylene, in the manner described more fully below. The body 12 presents a first, convexly curved external surface 16, which is generally pear-shaped in outline and symmetrical about a central axis 18.

In use the surface 16 provides an upwardly facing seating area for supporting a part of the body of a user, and more particularly a cyclist. The cushion 10 has a laterally lobed portion which is designed to support the buttock area of a user, while the remainder of the cushion tapers towards a nose portion 20, which is ordinarily directed in the direction of travel of the user. The nose portion 20 is accordingly so dimensioned as to present the least possible obstruction to the movement of the user's legs.

The surface 16 is preferably provided with lateral ribbing (not illustrated) to minimise the risk of damaging the cushion 10 during use. Indentations or nodes (not illustrated) may be formed on the surface 16 during the manufacture of the cushion 10 to maintain satisfactory frictional contact between the user and the cushion 10. If so required, a separate, suitably textured layer may be secured to the surface 16 for the same purpose.

The body 12 further presents a second convexly curved external surface area 22, generally opposing the first surface 16, and also substantially pear-shaped in outline and symmetrical about the axis 18. In use, the second surface 22 is located below the first surface 16, and fits into a holder 24 shown in Figures 7 and 8.

The body 12 defines a continuous indentation 26 along the outer periphery of the cushion 10, thereby effectively separating the first and second surfaces 16 and 22 from each other. A corresponding ridge 28, which constitutes a fastening means for the cushion 10, as described more fully below, extends between the indentation 26 on the one hand, and the second external surface 22 on the other.

The body 12 further provides an opening 30 located in a central region of the second surface 22, for admitting compressed gas into the cavity 14. The wall thickness of the body 12 in the immediate vicinity of the opening 30 is conveniently thickened to allow attachment of a nozzle or valve for releasable connection to a bicycle pump.

As mentioned above, the cushion 10 may be conveniently formed by a moulding process. Figure 6 illustrates one half of a mould 32 for blow-moulding the cushion described above.

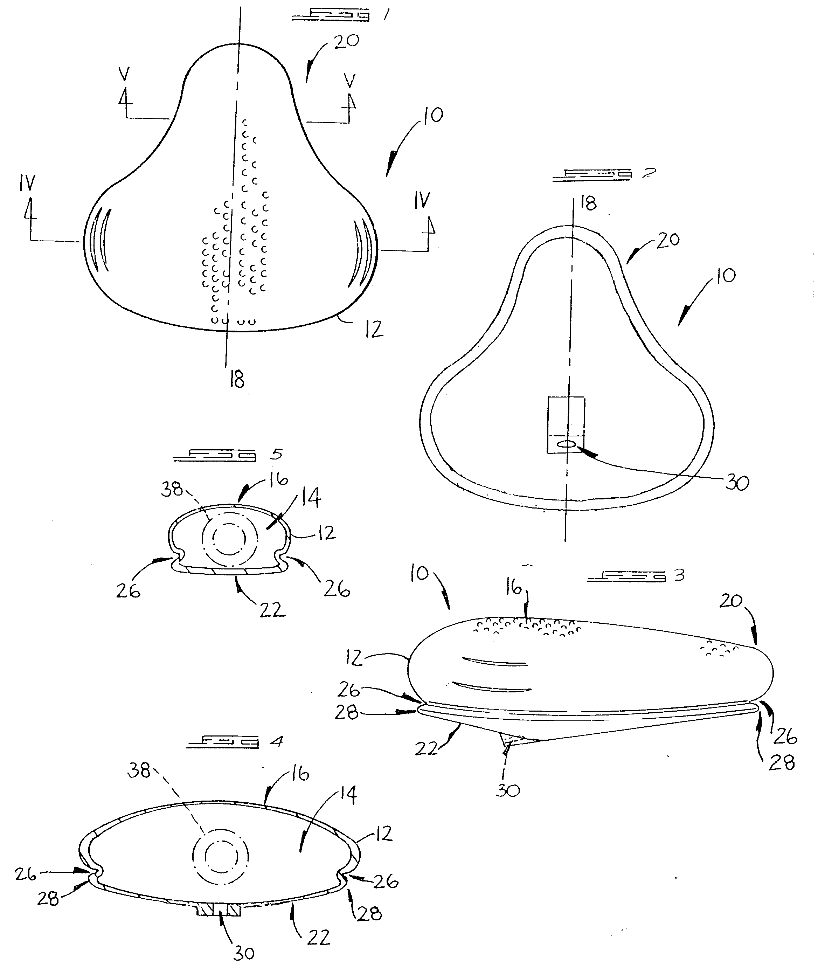

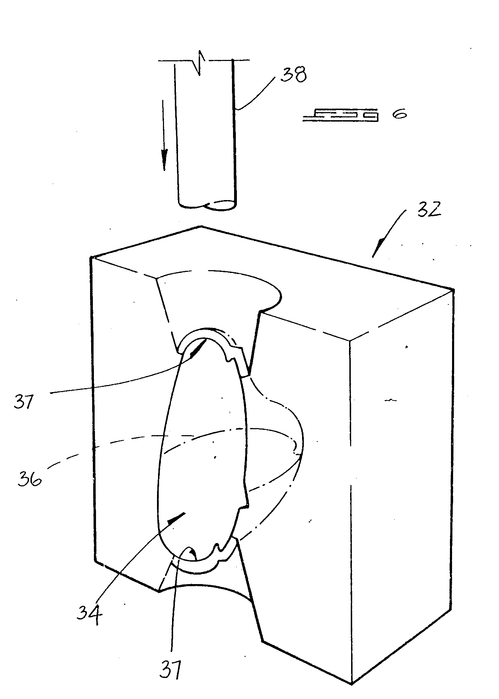

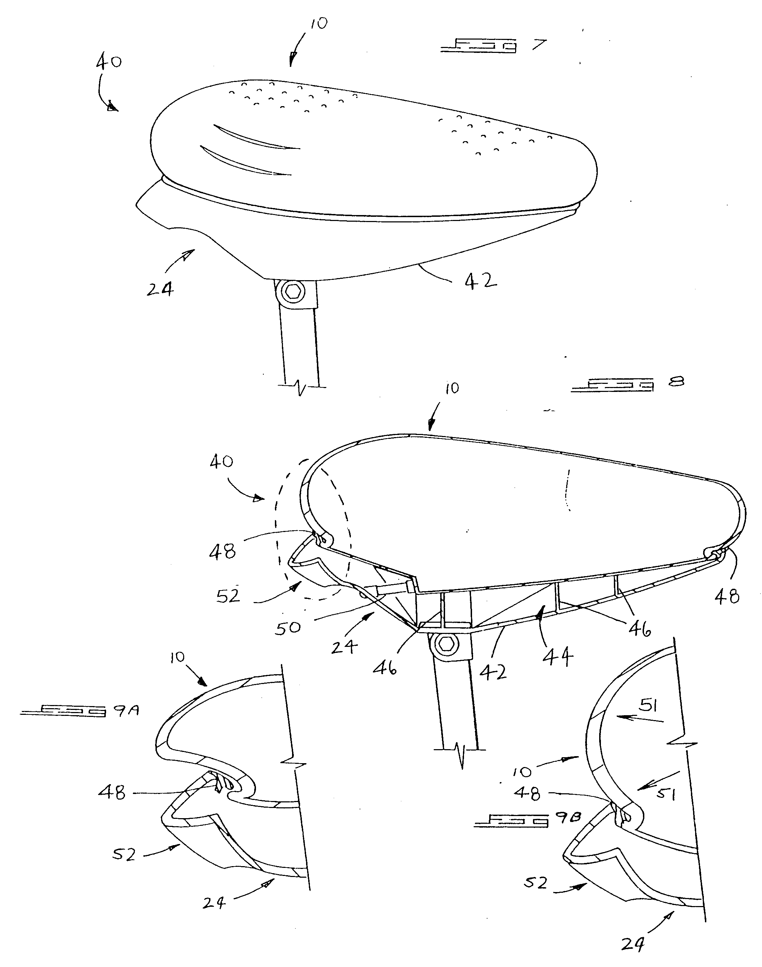

The mould 32 is split along a plane (not shown) coinciding with the axis 18 shown in Figures 1 and 2. The complementary mould portion (not shown) is accordingly a substantially mirror-inverted version of the portion shown in Figure 6. The mould 32 defines a cavity 34, which corresponds to the outer shape of the cushion 10 in its uninflated condition. The broken line 36 shown in Figure 6 illustrates a contour of the cavity 34, which roughly coincides with the section IV-IV in Figure 1.

Cutting edges 37 are provided towards the upper and lower edges of the cavity 34 to sever predetermined lengths of tubular plastics material from a parison 38. In use the mould 32 is opened and the lowermost portion of the parison 38 is heated and lowered until its lowermost edge has progressed a short distance beyond the lowermost cutting edge 37.

The mould 32 is then closed, thereby causing a portion of the parison 38 extending between the cutting edges 37 to be retained within the cavity 34. A compressed gas, most preferably air, is injected in known fashion into the inner bore of the portion of the parison 38 which is held captive by the mould 32, while the mould is simultaneously cooled.

The plastics material within the mould 32 accordingly deforms progressively until it bears against the inwardly facing walls of the mould. It is evident from Figure 6 that the ridge 28 of the cushion 10 is formed as an integral part of what eventually becomes the body 12 on completion of the moulding process.

If so desired a valve or nozzle (not shown in Figure 6) may be positioned in the mould 32 in a location corresponding to that of the opening 30 before the blow-moulding step commences. The valve or nozzle, as the case may be, is accordingly bonded to the body 12 before a finished cushion is released from the mould 32.

It is to be expected that the wall thickness of the body 12 will vary in accordance with the degree of deformation that the parison 38 undergoes during moulding. More particularly the wall thickness in the lobed portion of the cushion 10 (ie. in the region of section IV-IV) will be less than the wall thickness in the nose portion 20 (ie in the region of section V-V). As a result of this the volumetric expansion of the cushion 10 in the region of the lobed portion is generally greater than that in the nose portion 20 when air is pumped into the space 14.

The selective expansion of different portions of the cushion 10 may be modified by using a parison which is not perfectly annular in cross section. The uppermost surface area 16 may hence be made less deformable than the lowermost region 22 by feeding a parison having a correspondingly thickened wall in the region of the uppermost surface 16 into the mould 32.

Alternatively, a parison that is elliptical in cross section while having a circular bore may be used to provide regions of relatively low elasticity in the region of the indentation 26 and the ridge 28 on the cushion 10. If so desired, the cross sectional profile of the parison 38 and its wall thickness at various positions may be subject to computer control.

On completion of the blow-moulding step described above, a cushion 10 is released from the mould 32 and cooled down. The generally symmetrical configuration of the cushion 10, and, more particularly, the configuration of the recess 26 and the ridge 28, allow the finished cushion to be released by simply opening the mould 32.

The cushion 10 produced in this manner is conveniently used in conjunction with the holder 24 to provide a bicycle seat assembly, generally denoted by reference numeral 40 in Figures 7 and 8. The holder 24 is conveniently manufactured of a rigid plastics material such as an ABS resin, and preferably includes a cupped portion 42 which bounds a cavity 44 into which the cushion 10 is partially receivable. Peripheral web or ridge formations 46, which are integrally moulded with the cupped portion 42, project into the cavity 44, and are so designed that in use the second external surface 22 of the cushion 10 bears on the adjacent edges of the web formations.

A separately moulded ring 48 seats on the upper edges of the cupped portion 42, and is bonded to it by means of gluing or heat welding. The ring 48 has a flange formation which projects inwardly towards the cavity 44 from the upper peripheral region of the cupped portion 42. In other embodiments of the invention, not further illustrated here, the ring 48 may be integrally connected to the cupped portion 42 by way of a suitably adapted moulding step in which the cupped portion and ring are formed simultaneously.

The ridge 28 on the cushion 10 and the ring portion 48 on the holder 24 are so dimensioned as to be complementary with each other. This allows the cushion 10 to be secured to the holder 24 by positioning the partially inflated cushion on the holder so that the ridge 28 nests below the inwardly facing flange portion of the ring 48 (Figure 9A). The cushion 10 is accordingly held at least loosely captive along a continuous peripheral zone corresponding to the indentation 26.

It is evident from Figure 7 that the ring 48 is not planar, but tends to rise in the direction of what in use is the rearward region of the holder 24. The ridge 28 has a corresponding configuration. This has the general benefit of providing rearward support to a user seated on the cushion 10.

A valve 50 is secured to the cushion 10, and is arranged within a clearance space provided between the cupped portion 42 and the cushion 10. This arrangement serves to shield the valve 50 from accidental damage. The valve 50 projects through an opening in the cupped portion 42 of the holder 24, and is conveniently designed to accept a standard bicycle pump connector for inflating the cushion 10. The valve 50 may be optionally substituted by a manually operable pump, not further illustrated here, which remains permanently located in the clearance space between the cupped portion 42 and the cushion 10.

As air is pumped into the cushion 10, the body 12 expands progressively, as indicated by the arrows 51. This causes the ridge 28 to engage the ring portion 48 in a progressively stronger fit (Figure 9B). This effect becomes even more pronounced when a user is seated on the cushion 10.

The body 12 of the cushion 10 is generally so dimensioned that distortion particularly in the lobed region of the cushion is minimised as far as possible for the sake of stability without unduly sacrificing user comfort. This may be done, for example, by providing a more pronounced upward curvature in the upper edge of the cupped portion 42. The shape of the ring 48 and the ridge 28 are naturally adapted accordingly.

If so desired, the lobed portion of the cushion 10 may project only marginally, if at all, beyond the lateral edges of the cupped portion 42. It is generally desirable, however, that the lateral portions of the nose portion 20 of the cushion 10 stand proud of the cupped portion 42 to protect a user's legs from chafing against the edges of the holder 24.

The holder 24 is so designed as to be compatible with an existing saddle mounting on a bicycle. More particularly, the holder 24 has an opening with reinforced edges (not further illustrated in the drawings) which are so dimensioned as to match the spacing between a pair of corresponding metal rods on a conventional bicycle saddle. This allows the assembly 40 to be clamped to an existing saddle mounting without any special modification to the bicycle itself.

The holder 24 conveniently provides a recess 52 towards the rear of the cupped portion 42. This allows a bicycle fitted with the seat assembly40 to be lifted if so required by manually engaging the holder in the region of the recess 52.

A skilled reader will appreciate that the preferred embodiment of the invention described above lends itself to a variety of modifications and adaptations, all containing the essential features set out under the summary of the invention. If so desired the cushion 10 may, for example,be formed out of two or more separately moulded sub-units, each having at least part of a first and second external surface and peripheral fastening means as described above.

The inventor believes that the present invention holds particular benefits in that it lends itself more readily to techniques of mass production than other hitherto known inflatable seats. Moreover the peripheral fastening provided by the present invention is expected to provide a substantially more stable and comfortable seat than prior inflatable seats.

## Claims

1. A cushion for use in conjunction with a holder for holding the cushion, characterized in that the cushion includes:
- an elastic, inflatable body having a first external surface for contact with a portion of the body of a user; a second external surface which is locatable in a cavity of the holder, the holder having fastening formations projecting inwardly into the cavity; and a zone between the first and second external surfaces; and
- fastening means locatable in the zone between the first and second external surfaces, the fastening means being adapted to engage with the zone and with the fastening formations of the holder.

2. A cushion as claimed in claim 2, characterized in that the engagement of the fastening means with the zone and the fastening formations becomes tighter with increasing internal pressures within the inflatable body.

3. A cushion as claimed in claim 1, characterized in that the fastening means and the elastic body are integrally connected with each other.

4. A cushion as claimed in claim 1, characterized in that it is symmetrical about a longitudinal axis, and includes a pair of laterally extending lobes which are so dimensioned as to provide a seating area.

5. A cushion as claimed in claim 4, characterized in that the body includes a nose portion arranged along the longitudinal axis.

6. A cushion as claimed in claim 1, characterized in that the inflatable body is substantially elliptical when viewed in cross section through the lobes.

7. A cushion as claimed in claim 1, characterized in that the inflatable body is substantially elliptical when viewed along a section taken along the longitudinal axis of the body.

8. A cushion as claimed in claim 1, characterized in that the inflatable body includes at least one region of relative inelasticity, extending in the direction of its longitudinal axis.

9. A seat assembly comprising a cushion and a holder attachable to a support structure, characterized in that the holder defines a cavity and has peripheral fastening formations projecting into the cavity; and in that the cushion comprises an elastic, inflatable body having a first external surface for contact with a portion of the body of a user, a second external surface locatable in the cavity, and peripheral fastening means locatable in a zone between the first and second surfaces, the peripheral fastening means being adapted to engage with the zone and with the fastening formations of the holder.

10. A seat assembly as claimed in claim 9, characterized in that the engagement of the fastening means with the zone and with the fastening formations becomes tighter with increasing internal pressures within the inflatable body.

11. A seat assembly as claimed in claim 9, characterized in that the holder has a convexly curved rear portion, and tapers towards a forwardly directed nose portion.

12. A seat assembly as claimed in claim 9, characterized in that the cushion has an outer profile which is substantially similar to the inner profile of the holder.

13. A seat assembly as claimed in claim 12, characterized in that both the holder and the cushion are generally symmetrical about a common longitudinal axis.

14. A seat assembly as claimed in claim 9, characterized in that the holder is cupped, and has an inwardly projecting flange formation along its upper periphery, which provides a fastening formation for the cushion.

15. A seat assembly as claimed in claim 9, characterized in that the fastening means is in the form of a continuous, lateral recess which is complementary to the flange formation of the holder.

16. A seat assembly as claimed in claim 9, characterized in that the rearward region of the holder is raised in relation to the remainder of the holder's upper peripheral region.

17. A seat assembly as claimed in claim 9, characterized in that the nose portion of the cushion projects laterally beyond the immediately adjacent regions of the holder to prevent a user's legs from chafing against the holder during use.

18. An inflatable seat which includes a rigid receptacle which is locatable on a support structure; and a resiliently extendible barrier layer, characterized in that the barrier layer is held captive by the receptacle, in that it presents an external seating surface while defining at least part of an expandable space, and in that the barrier layer includes at least two zones of differing extendibility so that the barrier layer is capable of selective deformation under increasing inflation until it assumes a desired seating configuration.
